# EUROPEAN PATENT APPLICATION

(11) **EP 2 453 319 A1**
(43) Date of publication of application: **16.05.2012**
(21) Application number: 11188002.7
(22) Date of filing: 07.11.2011
(51) Int. Cl.: G03H 1/02, G03H 1/18, G03G 15/00

(54) **Method of forming hologram image, electrostatic image developing toner and hologram image forming apparatus**

(30) Priority: 11.11.2010 JP 2010252461
(71) Applicant: Konica Minolta Business Technologies, Inc., Tokyo 100-0005 (JP)
(72) Inventor: Hiramoto, Ryuichi, Tokyo, 100-0005 (JP); Nagase, Tatsuya, Tokyo, 100-0005 (JP); Matsushima, Asao, Tokyo, 100-0005 (JP); Uchino, Yasuko, Tokyo, 100-0005 (JP); Shirai, Aya, Tokyo, 100-0005 (JP); Fujita, Michiyo, Tokyo, 100-0005 (JP)
(74) Representative: Henkel, Breuer & Partner

(57) **Abstract**

A method of forming a hologram image comprising the steps of: forming an electrophotographic image (W,10) by forming an electrophotographic image area (12) on an image support (11) via an electrophotographic image forming method using a toner containing at least a thermoplastic resin; laminating an emboss hologram transferring member (20) over the electrophotographic image so that a surface on which a corrugation profile (21) is formed of the emboss hologram transferring member is in contact with the electrophotographic image area; heating (30A) the electrophotographic image and the emboss hologram transferring member at a temperature not lower than a softening temperature of the toner while pressurizing (30A) the emboss hologram transferring member onto the electrophotographic image; cooling (45) the electrophotographic image and the emboss hologram transferring member; and peeling (47) the emboss hologram transferring member (20) from the electrophotographic image (10H,W), whereby the corrugation profile of the emboss hologram transferring member is transferred onto the electrophotographic image area.

## Description

This application is based on Japanese Patent Application No. 2010-252461 filed on November 11, 2010 in Japanese Patent Office, the entire content of which is hereby incorporated by reference.

### FIELD OF THE INVENTION

The present invention relates to a method of producing a hologram image using an electrophotographic image obtained by an electrophotographic image forming method, an electrostatic image developing toner to form the electrophotographic image which forms the hologram image, and a hologram image forming apparatus.

### BACKGROUND OF THE INVENTION

A hologram enables forming a three dimensional image or a special decoration image employing light interference. Such a hologram has been used for, for example, varieties of packaging materials, picture-books and catalogs. Among various holograms, an emboss hologram has been often used since a hologram can be easily obtained by forming a corrugation profile exhibiting specific interference fringes on a substance.

As a method to form an emboss hologram on a substance, Patent Document 1 discloses a method to transfer a corrugation pattern formed on an emboss hologram transferring member onto a surface of a resin layer by forming a resin layer containing a UV curable resin on a substrate, followed by pressing the surface of an emboss hologram transferring member having a corrugation pattern onto the surface of the resin layer and by simultaneously applying a UV ray.

As a method to form an emboss hologram on the surface of a printed substance, Patent Document 2 disclosed a method to form an emboss hologram inline in an offset printing.

However, the method disclosed in Patent Document 1 has a problem that a complicated construction of the apparatus and complicated formation processes are necessary because needed is an apparatus to apply a UV curable resin on the surface of a substance and to harden the resin. The method of Patent Document 2was obtained by modifying the method of Patent Document 1 to conduct the method in an offset printer via inline formation. This method is suitable for mass production of the products since the method is combined with an offset printer, however, not suitable for on demand printing or for a demand variable printing in which a small number of products are printed. Further images formed of a UV curable resin is generally hard, and exhibits poor flexibility. Therefore, such an image tends to cause cracks, when the image is slightly bent, thus, the quality of the image is easily deteriorated.

Patent Document 1 Japanese Patent Application Publication Open to Public Inspection (thereafter referred to as JP-A) No. 7-261647

Patent Document 2 JP-A No. 2009-29110

### SUMMARY OF THE INVENTION

In view of the foregoing problems, the present invention was achieved.

An object of the present invention is to provide a method of forming a hologram image exhibiting excellent flexibility while being less degradable using an electrophotographic image obtained by an electrophotographic image forming method, the method enabling easy formation of a hologram image without complicated production processes as well as a large scale apparatus.

Another object of the present invention is to provide an electrostatic image developing toner used for the method and a hologram image forming apparatus.

One of the aspects to achieve above object of the present invention is a method of forming a hologram image comprising the steps of
forming an electrophotographic image by forming an electrophotographic image area on an image support via an electrophotographic image forming method using a toner containing at least a thermoplastic resin;
laminating an emboss hologram transferring member over the electrophotographic image while a surface on which a corrugation profile is formed of the emboss hologram transferring member is in contact with the electrophotographic image area;
heating the electrophotographic image and the emboss hologram transferring member at a temperature not lower than a softening temperature of the toner while pressurizing the emboss hologram transferring member onto the electrophotographic image area;
cooling the electrophotographic image and the emboss hologram transferring member; and
peeling the emboss hologram transferring member from the electrophotographic image, whereby the corrugation profile of the emboss hologram transferring member is transferred onto the electrophotographic image area.

### BRIEF DESCRIPTION OF THE DRAWINGS

FIGS. 1a, 1b, 1c and 1d are explanation drawings schematically illustrating an outline of the hologram image forming method of the present invention.
FIG. 2 is an explanation drawing schematically illustrating a hologram image forming apparatus of the present invention.
FIGs. 3a and 3b are explanation drawings illustrating the function of a hologram image area used for certification of an original document, in which FIG. 3 a shows an original document on which a hologram image area for certification of an original document is provided, and FIG. 3b shows a copy of FIG. 3a.

### DESCRIPTION OF THE PREFERRED EMBODIMENTS

Above objects of the present invention are achieved by the following structructures.
(1) A method of forming a hologram image comprising the steps of:
   forming an electrophotographic image by forming an electrophotographic image area on an image support via an electrophotographic image forming method using a toner containing at least a thermoplastic resin;
   laminating an emboss hologram transferring member over the electrophotographic image so that a surface on which a corrugation profile is formed of the emboss hologram transferring member is in contact with the electrophotographic image area in the electrophotographic image;
   heating the electrophotogfaphic image and the emboss hologram transferring member at a temperature not lower than a softening temperature of the toner while pressurizing the emboss hologram transferring member onto the electrophotographic image;
   cooling the electrophotographic image and the emboss hologram transferring member, and peeling the emboss hologram transferring member from the electrophotographic image,
   whereby the corrugation profile of the emboss hologram transferring member is transferred onto the electrophotographic image area.
(2) The method of Item 1, wherein cooling is carried out at a temperature lower than "a softening temperature of the toner- 50 °C".
(3) The method of Item I or 2, wherein the electrophotographic image has an electrophotographic image area comprising a clear toner as an outermost surface.
(4) The method of Item 1 or 2, wherein an electrophotographic image area comprising a clear toner is formed on an entire surface of the image support
(5) The method of any one of Items 1 to 4, wherein the emboss hologram transferring member has a film sheet form, a belt form, a stamp form or a roller form.
(6) The method of any one of Items 1 to 5, wherein the emboss hologram transferring member has a belt form.
(7) The method of Item 6, wherein a material constituting the emboss hologram transferring member having the belt form is polyimide or polyethylene telephtharate.
(8) The method of any one of Items 1 to 7, wherein the step of heating and pressurizing is carried out employing a heating/pressurizing device having a pair of corrugation profile tracing rollers equipped with at least one heating means, the pair of rollers being pressed with each other,
   wherein a width of a nip portion formed between the pair of corrugation profile tracing rollers is 1 to 8 mm.
(9) The method of Item 8, wherein time in which a point of the electrophotographic image passes through the nip portion is 0.03 to 0.4 second.
(10) The method of any one of Items 1 to 9, wherein a pressure applied in the step of heating and pressurizing is 0.10 to 0.80 MPa.
(11) The method of any one of Items 1 to 10, wherein a specific information recorded portion is formed on the image support and the electrophotographic image area is formed on the specific information recorded portion.
(12) The method of any one of Items 1 to 10, wherein a specific information recorded portion is formed on the image support and the electrophotographic image area is formed on the specific information recorded portion, wherein the electrophotographic image area comprises a clear toner.
(13) An electrostatic image developing toner used in the method of any one of Items 1 to 10.
(14) A hologram image forming apparatus comprising
   an electrostatic latent image carrier on which an electrostatic latent image is formed,
   a developing means by which the electrostatic latent image is developed using a toner containing at least a thermoplastic resin to form a toner image,
   a transferring means by which the toner image is transferred onto an image support,
   a fixing means by which the toner image is fixed onto the image support by heating to form an electrophotographic image area on the image support, whereby an electrophotographic image is obtained, and
   a hologram processing means by which a hologram image is formed on the electrophotographic image area according to a method comprising the steps of:
      laminating an emboss hologram transferring member over the electrophotographic image so that a surface on which a corrugation profile is formed of the emboss hologram transferring member is in contact with the electrophotographic image area of the electrophotographic image;
      heating the electrophotographic image and the emboss hologram transferring member at a temperature not lower than a softening temperature of the toner while pressurizing the emboss hologram transferring member onto the electrophotographic image;
      cooling the electrophotographic image and the emboss hologram transferring member; and
      peeling the emboss hologram transferring member from the electrophotographic image,
      whereby the corrugation profile of the emboss hologram transferring member is transferred onto the electrophotographic image area.

According to the method of forming a hologram image of the present invention, a corrugation profile generating a hologram image can be easily formed on the surface of an electrophotographic image area only by conducting a specific treatment on an electrophotographic image obtained by an electrophotographic image forming method, whereby a hologram can be easily obtained without through complicated processes or using a large scale apparatus.

Since the corrugation profile of an emboss hologram transferring member is transferred onto an electrophotographic image area formed by using a toner containing a thermoplastic resin, the obtained hologram image exhibits an excellent elastic property as well as the elastic property of the electrophotographic image area before the corrugation profile is transferred. Accordingly, the obtained hologram image has an excellent flexibility which is the same as that of the electrophotographic image area before the corrugation profile is transferred, whereby the hologram image becomes less degradalble.

The present invention will be specifically explained below.

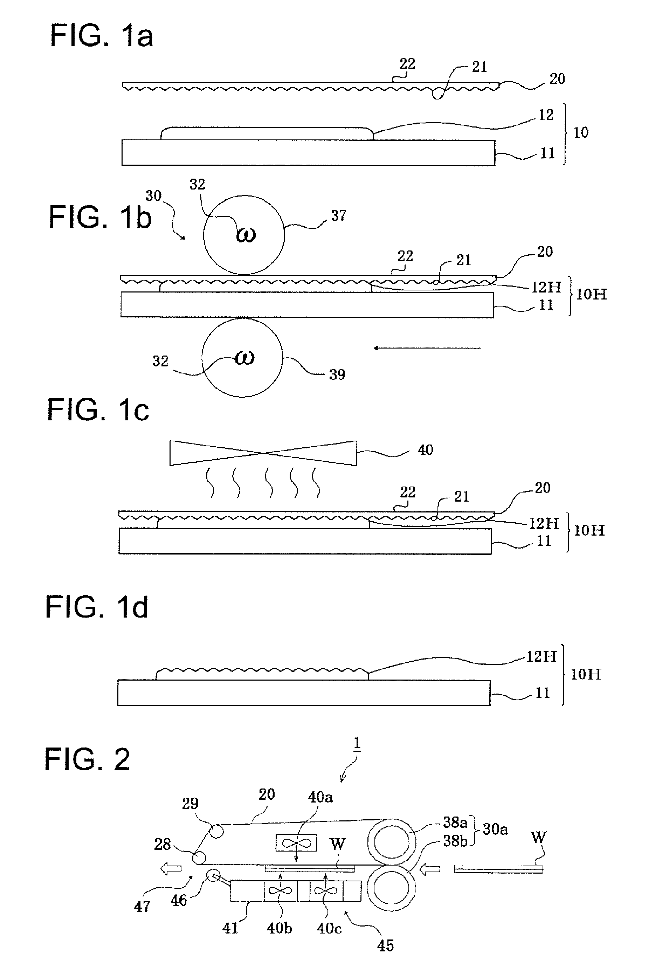

FIGs. 1a to 1d are explanation drawings schematically illustrating an outline of the hologram image forming method of the present invention. In the method of forming a hologram image of the present invention, first, an electrophotographic image 10 is obtained by forming an electrophotographic image area 12 on an image support I 1 via an electrophotographic image forming method, as shown in FIG. 1a. Then, an emboss hologram transferring member 20 is placed over the electrophotographic image area 12 of the electrophotographic image 10 while a surface on which a corrugation profile is formed 21 (hereafter also referred to as a corrugation surface) of the emboss hologram transferring member 20 is in contact with the electrophotographic image area 12, and a specific heating/pressurizing treatment is carried out (refer to FIG. Ib), followed by cooling the electrophotographic image 10 and the emboss hologram transferring member 20 (refer to FIG. 1c). After that by peeling the emboss hologram transferring member 20 from the electrophotographic image area 12, the corrugation profile of the emboss hologram transferring member 20 is transferred onto the electrophotographic image area 12 (refer to FIG.1 d), whereby a hologram image area 12H generating a hologram is formed, and, thus, a hologram image 10H is obtained.

### [Formation of electrophotographic image]

In the method of forming a hologram image of the present invention, an electrophotographic image 10 which is an object of transferring a corrugation profile of an emboss hologram transferring member 20 has a construction in which an electrophotographic image area 12 is formed on an image support 11, and obtained by an electrophotographic image forming method. Specifically, it is obtained according to the method containing the steps of: forming an electrostatic latent image on an electrostatic latent image carrier; forming a toner image by developing the electrostatic latent image using a toner containing at least a thermoplastic resin; transferring the toner image onto an image support 11 to form an unfixed toner image; and forming an electrophotographic image area 12 by heat-fixing the unfixed toner image.

The thickness of an electrophotographic image area 12 is preferably 3 - 20 µm, and more preferably 7 -- 20 µm.. The thickness of the electrophotographic image area 12 in this range enables generating a sufficiently clear hologram.

The thickness of an electrophotographic image area 12 can be specifically adjusted by the control of the amount of toner adhesion of each color in the development process of an electrostatic latent image, and the control of the number of overlaid colors.

The construction of an electrophotographic image area 12 may be a monochrome image formed by a chromatic color, a polychrome color image obtained by superposing chromatic color toners, a clear toner image, or an image obtained by superposing one or more chromatic color toners and a clear toner. Of these, preferable is an image of which outermost surface is formed by a clear toner, since it is possible to generate a hologram on the entire surface of image support 11, even when a chromatic color toner image is formed only partially on the image support 11.

The area of the electrophotographic image area 12 is not specifically limited. According to the method of forming a hologram image of the present invention, a hologram can be generated even when the image area is small such as in the case of character images or when the image area is large such as in the case of a solid image.

The methods of, electrostatic latent image formation, developing an electrostatic latent image, and transferring a toner image, to form the electrophotographic image area 12 of an electrophotographic image 10 are not specifically limited, and well-known various methods may be adopted.

The heat-fixing method of an unfixed toner image to form the electrophotographic image area 12 of an electrophotographic image 10 is not specifically limited, and well-known various methods may be adopted.

Specifically, for example, a fixing equipment of a contact heating system may be used. [Specific heating/pressurizing treatment]

A specific heating/pressurizing treatment in the method of forming a hologram image of the present invention is conducted by heating the electrophotographic image and the emboss hologram transferring member at a temperature not lower than a softening temperature of the toner while pressurizing the emboss hologram transferring member onto the electrophotographic image area.

The specific heating/pressurizing treatment may be conducted, for example, by using a fixing equipment of a contact heating system.

Specifically, for example, as shown in FIG. 1b, by using a heating/pressurizing device 30 in which a heating roller 37 equipped with a heat source 32 and a pressurizing roller 39 are pressing with each other, the heating/pressurizing treatment may be conducted by passing a laminate of an electrophotographic image 10 and a emboss hologram transferring member 20 through a nip formed at a pressurized portion of the rollers.

The heating temperature in the specific heating/pressurizing treatment means a surface temperature of a surface 22 of the emboss hologram transferring member 20 opposite to the corrugation surface 21 being in contact with the electrophotographic image area 12, when the heating/ pressurizing treatment is conducted while the electrophotographic image area 12 of an electrophotographic image 10 and the corrugation surface 21 of an emboss hologram transferring member 20 are in contact with each other. Specifically, it is a surface temperature of the surface 22 of the emboss hologram transferring member 20 just after passing through the heating/pressurizing rollers measured by using a radiation thermometer IR-0510 (produced by KONICA MINOLTA SENSING, Inc).

The heating temperature in the specific heating/pressurizing treatment may be a temperature not lower than the softening temperature of the toner, however, it is preferable that the heating temperature is not lower than "the softening temperature of the toner + 10 °C" in view of the transfer property of the corrugation profile of the emboss hologram transferring member 20.

Specifically, the heating temperature depends on the softening temperature of a thermoplastic resin, however, the heating temperature is preferably 80 - 200 °C, and more preferably 100 - 180 °C.

Specifically, the heating temperature is adjusted by controlling the surface temperature of a a heating roller and a pressurizing roller so that the surface temperature of the surface 22 of the embossing hologram transfer member 20 in the laminate after treated may become within the above-mentioned temperature range.

When the heating temperature is lower that the softening temperature of the toner, the electrophotographic image area 1 2 cannot sufficiently trace the corrugation profile of an emboss hologram transferring member 20, since softening of the thermoplastic resin which constitutes a toner becomes inadequate, whereby the fluidity ofthe binder resin becomes lower. Alternatively, when the heating temperature exceeds 200 °C, a trouble such as "paper blister" (namely, an image defect caused by moisture evaporation from the image support) tends to occur.

The pressure in the specific heating/pressurizing treatment is preferably 0.10 - 0.80 MPa, and more preferably 0.20 - 0.70 MPa.

When the pressure is less than 0.10 MPa, the electrophotographic image area 12 may not be able to sufficiently trace the corrugation profile of the emboss hologram transferring member 20, and, when the pressure exceeds 0.80 MPa, the image support 11 may be damaged, when the thickness of the electrophotographic image area 12 is small.

The treatment time of the specific heating/pressurizing treatment, namely, the duration in which the heating and the pressurizing are carried out, may be a duration in which the thermoplastic resin of the toner can be melted and the electrophotographic image area 12 can trace the corrugation profile of the emboss hologram transferring member 20, which depends on the kind of the thermoplastic resin of a toner, heating temperature and applying pressure, however, the time in which a point of the electrophotographic image area passes through the nip portion formed between a pair of corrugation profile tracing rollers is preferably 0.03 - 0.4 second, and more preferably 0.08 - 0.35 second.

As a specific example of each of a heating temperature, a pressure and a treatment time of the specific heating/pressurizing treatment, when the softening temperature of the thermoplastice resin is 134 °C, the heating time is 150 °C , the pressure is 0.3 MPa, and the treatment time is 02 sec.

### [Cooling]

The cooling temperature of the laminate in the specific heating/pressurizing treatment may be a temperature at which the thermoplastic resin constituting the electrophotographic image area 12 which is subjected to the specific heating/pressurizing treatment does not fluidize, and, for example, the cooling temperature is preferably less that "the softening temperature of the toner - 50 °C", more preferably less that "the softening temperature of the toner - 60 °C", and further more preferably less that "the softening temperature of the toner- 70°C".

The specific method of cooling is not specifically limited, and well-known various methods may be adopted. For example, a method to apply a cold air of which temperature is controlled or a method to use a heat sink, as shown in FIG. 1c, may be cited.

### [peeling]

The method of peeling the emboss hologram transferring member 20 from the cooled laminate is not specifically limited, and well-known various methods may be adopted. For example, cited are a method to blow air and a method to control the curvature of the roller hanging the emboss hologram transferring member 20 considering the stiffness on the image support 11, when the emboss hologram transferring member 20 has a film sheet form or a belt form.

### [Embossing hologram transferring member]

The emboss hologram transferring member 20 used in the present invention has one surface which is subjected to a emboss processing by which a hologram pattern is recorded as an minute corrugation profile to form a corrugation surface 21. This emboss hologram transferring member 20 may have a film sheet form, a belt form, a stamp form or a roller form, however, it specifically preferably has a belt form the view point of productivity.

When the embossing hologram transferring member 20 has a belt form, examples of a substrate material of the emboss hologram transferring member 20 include polyimide and polyethylene terephthalate (PET). The belt may be a seamless belt without a joint, or a belt obtained by connecting film sheets to form a belt.

The thickness of an emboss hologram transferring member is preferably 10-30 µm when a minute corrugation profile is formed on the surface of a substrate itself, and when a surface layer having a corrugation profile generating a hologram is formed on a substrate, the thickness of the surface layer is preferably 10 - 30 µm and the thickness of the substrate is preferably 10 - 20 µm

Here, a "hologram" means a substance on which interference fringes obtained by overlapping laser light reflected from an object and laser light of the same light source are recorded In an emboss hologram, the interference fringes are recorded as minute corrugation on the surface of a substance. The emboss hologram transferring member of the present invention may be one in which a minute corrugation profile is formed on the surface of a substrate itself, or one in which a surface layer having a corrugation profile generating a hologram is formed on a substrate.

An example of a specific hologram processing apparatus in which a step of conducting a specific heating/pressurizing treatment using a belt form emboss hologram transferring member 20; a step of cooling; and a step of peeling the emboss hologram transferring member 20, are sequentially conducted will be explained below using FIG. 2.

The hologram processing apparatus 1 contains:
a heating/pressurizing device 30a having corrugation profile tracing rollers 38a and 38b which are arranged in a condition where the rollers are in contact or pressing with each other and are driven at a constant speed;
an endless belt form emboss hologram transferring member 20 which is hung by one of the corrugation profile tracing rollers 38a, a peeling roller 28, and a supporting roller 29, while the corrugation surface 21 becomes outside;
a cooling unit 45 which is on the downstream of the heating/pressurizing device 30a in the conveyance direction of the emboss hologram transferring member20, but on the upper stream of the peeling roller 28; and
a peeling portion 47 provided in the vicinity of the peeling roller 28 on the downstream of the cooling unit 45.

In the heating/pressurizing device 30a, in order to surely transfer the corrugation profile of the emboss hologram transferring member 20 onto the electrophotographic image area 12, it is preferable that a pair of corrugation profile tracing rollers 38a and 38b are provided under a condition in which the roller are pressed with each other. In this case, one of or both of the corrugation profile tracing rollers 38a and 38b has a silicone rubber layer or a fluorine-containing rubber layer on the surface of the roller, whereby a nip portion is formed at the pressurizing portion ofthe corrugation profile tracing rollers 3 8a and 38b. The width of the nip portion is preferably 1 - 8 mm.

At least one of the corrugation profile tracing rollers 38a and 38b is equipped with a heat source. For example, when only one of the corrugation profile tracing rollers 38a is provided with a heat source from a viewpoint of electricity consumption or a working efficiency, a sufficient heating effect is obtained.

The corrugation profile tracing roller 3 8a is formed, for example, by covering the surface of a metallic substrate of such as aluminum with an elastic layer containing, for example, a silicone rubber, and can be adjusted to have a prescribed outer diameter. The corrugation profile tracing roller 38a has, for example, a halogen lamp of 300-350W in its inside as a heat source to have a construction to heat from inside so as to obtain a prescribed surface temperature.

The corrugation profile tracing roller 38b is formed, for example, by covering the surface of a metallic substrate of such as aluminum with an elastic layer containing, for example, a silicone rubber, and further with a releasing layer of, for example, a PFA (namely, a tetrafluoroethylene / parfluoroalkyl vinylether copolymer) tube on the surface ofthe elastic layer, and can be adjusted to have a prescribed outer diameter. The corrugation profile tracing roller 38b may also have, for example, a halogen lamp of 300-350W in its inside as a heat source to have a construction to heat from inside so as to obtain a prescribed surface temperature.

The cooling unit 45 contains:
a fan 40a provided in a condition of non-contact with the emboss hologram transferring member 20 in the region between the corrugation profile tracing roller 38a and the peeling roller 28 which are in the inside of the emboss hologram transferring member 20 and hanging it; and
a cooling structure in which two cooling fans 40b and 40c and a heat sink 41 are connected, which is provided in a condition of non-contact with the emboss hologram transferring member 20 in the region between the corrugation profile tracing roller 38b and a conveyance assisting roller 46 which are on the outside of the emboss hologram transferring member 20.

The peeling unit 47 is constructed of:
a bending portion of the emboss hologram transferring member 20 at which the following spatial relationship is maintained, namely, the peeling roller 28, the corrugation profile tracing roller 38a and a support roller 29 forms an acute angle while the peeling roller is a fulcrum, the conveyance direction of the of the emboss hologram transferring member 20 being largely varied at the bending portion; and
a conveyance assisting roller 46 which is provided facing the peeling roller 28 at a distance which is the same as the thickness of the treatment subject W constructed of an image support 11 and an electrophotographic image area 12 or at a distance slightly longer than the width of W from the emboss hologram transferring member 20.

In such a hologram processing apparatus, transfer of the corrugation profile of the emboss hologram transferring member 20 to the electrophotographic image area 12 is carried out as follows.

Namely, for example, a treatment subject W constituted of an image support 11 and an electrophotographic image area 12 covering the entire surface of the image support 11 is nipped and conveyed at the nip portion of the heating/pressurizing device 30a by the driving motion of the corrugation tracing rollers 38a and 38b so that the corrugation surface 21 of the emboss hologram transfer member 20 is in contact with the electrophotographic image are 12 of the treatment subject W. At the nip portion, the electrophotographic image area 12 is heated to melt and simultaneously fused to the emboss hologram transfer member 20 so that the electrophotographic image area 12 follow the corrugation pattern. By the fusion, close contact of the treatment subject W to the emboss hologram transfer member 20 is attained and the treatment subject W is then conveyed to the cooling unit 45 according to the circulating movement of the emboss hologram transfer member 20 toward the direction of the arrow in FIG. 2.

While the treatment subject W is passed through the cooling unit 45, the treatment subject W is forcibly cooled by the air from the fan 40 and the cooling unit, whereby a hologram image area 12H is formed.

Then, the treatment subject W is conveyed to peeling unit 47 and arrives at the bending portion where the treatment subject W is peeled from the emboss hologram transfer member 20 utilizing the stiffness (or the elasticity) of the image support 11 when the moving direction of the emboss hologram transfer member 20 is largely varied. After that, the peeling motion is accelerated as the center of gravity of the treatment subject W is transferred to the conveyance assisting roller 46 and the transfer of the corrugation profile of the emboss hologram transfer member 20 is completed, and, thus, a hologram image 10H is obtained.

Such a method of forming a hologram image can be specifically preferably employed, for example, in an on-demand printing method in which a small number of printed materials are formed upon accepting a demand, or an on-demand-variable printing method in which printed materials having the same layout but different contents are produced.

Further, it is possible to use the hologram image of the present invention to certificate an original document, by which judgment whether a document is original or copy is possible, because, even when a hologram image area is provided on a portion of a document where specific information is recorded (also referred to as a "specific information recorded portion"), no hologram image is obtained when the original document is electrophotographically copied. When a hologram image is used to certificate an original document, the toner forming the hologram image area is preferably a clear toner.

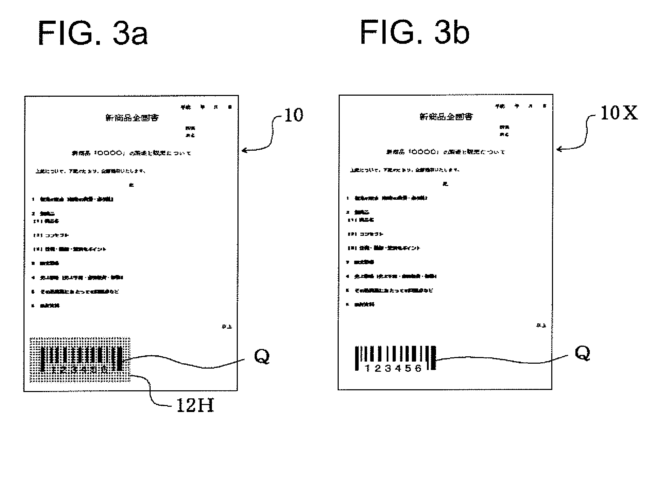

An example in which a hologram image is used for the certification of an original document is illustrated in FIGs. 3a and 3b. In FIGs. 3a and 3b, Q represents a specific information recorded portion (also referred to as a "specific information recorded image area") and 12H represents a hologram image area formed according to the aforementioned method. When a sheet-like original document 10 is copied to form a copy 10X, the hologram image area 12H cannot be formed on the copy 10X, Thus, it is recognized that the copy 10X is not an original document

In the present invention, the "specific information" represents one which distinctively expresses the feature of the document, for example, identification information, and administrative information, however, the specific information of the present invention is not limited thereto.

A hologram image forming apparatus to conduct the method of forming a hologram image as described above of the present invention contains
an electrostatic latent image carrier on which an electrostatic latent image is formed,
a developing means by which the electrostatic latent image is developed using a toner containing at least a thermoplastic resin to form a toner image,
a transferring means by which the toner image is transferred onto an image support 11,
a fixing means by which the aforementioned toner image is fixed onto the image support 11 by heating to form an electrophotographic image area 12 on the image support 11, whereby an electrophotographic image10 is obtained, and
a hologram processing means by which a hologram image is formed on the electrophotographic image area 12 according to a method comprising the steps of:
   laminating an emboss hologram transferring member 20 over the electrophotographic image 10 so that a surface 21 on which a corrugation profile is formed of the emboss hologram transferring member 20 is in contact with the electrophotographic image area 12 of the electrophotographic image 10;
   heating the electrophotographic image 10 and the emboss hologram transferring member 20 at a temperature not lower than a softening temperature of the toner while pressurizing the emboss hologram transferring member 20 onto the electrophotographic image 10;
   cooling the electrophotographic image 10 and the emboss hologram transferring member 20; and
   peeling the emboss hologram transferring member 20 from the electrophotographic image 10,
   whereby the corrugation profile of the emboss hologram transferring member 20 is transferred onto the electrophotographic image area 12.

### [Image support]

The image support 11 usable for the hologram image forming method of the present invention is not specifically limited as far as it can carry the electrophotographic image area 12, and the following materials can be used Specific examples include: plain papers from thin to thick, high quality paper, coated printing papers such as art paper or coated paper, and papers available on the market such as Japanese paper and postcard paper; however the image support used for the present invention is not limited to them.

According to the method of forming a hologram image of the present invention, a hologram image 10H can be easily formed irrespective of the kind of image support 11,as far as an electrophotographic image area 12 of which thickness covers the unevenness ofthe image support 11 is obtained.

As an image support 11 used for the method of forming a hologram image of the present invention, specifically preferable are coat papers having smaller surface unevenness, such as "OK Top Coat. 157 g/m²" (Produced by Oji paper, co., ltd.) and "OK Gloss Coat 157 g/m²", as commercially available products, since a desirable thickness of the electrophotographic image area 12 is easily obtained.

### [Toner]

The toner for forming the electrophotographic image area 12 in the electrophotography image 10 contains toner particles containing at least a thermoplastic resin.

As a toner, cited may be a chromatic color toner used for the purpose of coloring due to light absorption or light scattering, and a clear toner which does not contain such a colorant and is substantially transparent.

A clear toner is used for the purpose of obtaining merits, for example, to obtain a high level of gloss in the obtained electrophotographic image by overlapping a toner image of a clear toner with a toner image formed by a chromatic color toner.

In the method of forming a hologram image of the present invention, by forming a toner image of a clear toner, namely, a clear toner layer, on all over the image support 11, a hologram can be formed on all over the image support 11 even when the toner image is only partially formed by a chromatic color toner on the image support 11.

### [Binder resin]

The binder resin constituting the toner for forming an electrophotographic image used for the method of forming a hologram image ofthe present invention contains at least a thermoplastic resin.

The content of the thermoplastic resin in the binder resin is preferably 90 - 100 % by mass.

Specifically, with respect to the toner which forms the outermost surface of the electrophotographic image area 12, the ratio of the thermoplastic resin is preferably 100%, since the transfer of the corrugation profile is carried out via a specific heating/pressurizing treatment, cooling and peeling.

When the content of the thermoplastic resin in the binder resin is less than 90 % by mass, the corrugation profile of the emboss hologram transfer member 20 may not be accurately transferred, whereby a clear hologram may not be obtained.

### [Thermoplastic resin]

In the present invention, a thermoplastic resin means a resin having a character that it becomes soft by heating and shows a plastic nature, and becomes solidified by cooling.

As examples of a thermoplastic resin, varieties of well known thermoplastic resins may be cited, for example: vinyl resins such as a styrene resin, an (meth)acrylic resin, and a styrene-(meta) acrylic copolymer resin; a polyester resin; a polyamide system resin, a polycarbonate resin, a polyether resin, a polyvinyl acetate resin, a polysulfon resin and a polyurethane resin. These resins may be used alone or in combination of two or more resins.

The thermoplastic resin may be a crystalline resin having a melting point or a non-crystalline resin having no melting point and has a glass transition pint.

A crystalline resin means a resin exhibiting an apparent thermal absorption peak in differential scanning calorimetry (DSC), instead of a stepwise thermal absorption behavior. The above mentioned "apparent thermal absorption peak" means that the half-value width of the thermal absorption peak when measured at a temperature increasing rate of 10 °C/min in the differential scanning calorimetry (DSC) is 15 °C or less. A crystalline polyester may be cited as an example of a crystalline resin.

A non-crystalline resin means a resin which does not exhibit an apparent thermal absorption peak in aforementioned DSC and a resin other than the crystalline resin. Examples of a non-crystalline resin include a styrene resin, a (meth)acrylic resin, a styrene-(meth)acryl copolymer resin and a non-crystalline polyester resin.

Of these resins, it is preferable to use a non-crystalline resin as the thermoplastic resin in view of the transparency, and preferably usable are a styrene resin, a (meth)acrylic resin, a polyester resin and a mixture thereof in view of the low viscosity of the melt and an excellent sharp melting property.

When a toner is manufactured by a chemical process, for example, an emulsion-polymerization aggregation method or a dissolution-suspension method, a styrene resin, a (meth)acrylic resin, a polyester resin, and a mixed resin thereof may be preferably used from the viewpoint of a polymerization property and dispersibility.

### [Resin other than a thermoplastic resin]

As examples of a resin other than the thermoplastic resin which constitutes the binder resin, thermosetting resins, such as an epoxy resin, a urea resin, and a phenol resin, may be cited. These resins may be used alone or in combination of two or more kinds.

### [Colorant]

When the toner of the present invention is a chromatic color toner, commonly known dyes and pigments are usable as a colorant contained in the toner.

Various known materials may be used optionally for the colorant for black toner, for example, carbon black such as furnace black and channel black, magnetic material such as magnetite and ferrite, a dye, an inorganic pigment containing non-magnetic iron oxide.

Specific examples of a colorant for a color toner include pigments such as C.I. Pigment Red 5, Pigment Red 48:1, Pigment Red 53:1, Pigment Red 57:1, Pigment Red 81:4, Pigment Red 122, Pigment Red 139, Pigment Red 144, Pigment Red 149, Pigment Red 166, Pigment Red 177, Pigment Red 178, Pigment Red 222, Pigment Red 238, Pigment Red 269; C.I. Pigment Yellow 14, Pigment Yellow 17, Pigment Yellow 74, Pigment Yellow 93, Pigment Yellow 94, Pigment Yellow 138, Pigment Yellow 155, Pigment Yellow 180, Pigment Yellow 185; C.I. Pigment Orange 31, Pigment Orange 43; C.I. Pigment Blue 15;3, Pigment Blue 60, Pigment Blue 76, and dyes such as C.I Solvent Red 1, Solvent Red 49, Solvent Red 52, Solvent Red 58, Solvent Red 68, Solvent Red 11, Solvent Red 122; C.I. Solvent Yellow19, Solvent Yellow 44, Solvent Yellow 77, Solvent Yellow 79, Solvent Yellow 81, Solvent Yellow 82, Solvent Yellow 93, Solvent Yellow 98, Solvent Yellow 103, Solvent Yellow 104, Solvent Yellow 112, Solvent Yellow 162, C.I. Solvent Blue 25, Solvent Blue 36, Solvent Blue 69, Solvent Blue 70, Solvent Blue 93 and Solvent Blue 95.

Colorants may be used one or two or more species in combination for obtaining respective color.

The number average primary particle diameter of the colorant particles in the toner particles is preferably 10 - 200 nm, although it depends on the type of the colorant.

The method for introducing the aforementioned colorant into the toner particles is not specifically limited, and the following methods are applicable, when the toner is manufactured by an emulsion polymerization aggregation method which will be described later, (1) a method in which a dispersion liquid containing a colorant and a binder resin which are coexisting at molecular level is prepared and then the particles are aggregated to obtain toner particles; or (2) a method in which particles of a colorant are prepared separately from the particles of a binder resin, and the dispersion liquids of both particles are mixed, followed by aggregating the particles to obtain toner particles.

The particles in which the binder resin and the colorant are coexisting at molecular level can be prepared by dissolving a colorant into a polymerizable monomer which is used to form the binder resin, in advance, followed by polymerizing the polymerizable monomer containing the colorant.

The content of the colorant is preferably in the range of 1 to 10 mass%, and more preferably, it is in the range of 2 to 8 mass%. When the content of the colorant is less than 1 mass%, the coloring power of the toner may be insufficient. On the other hand, when the content of the colorant exceeds 10 mass%, it may occur releasing of the colorant or adhesion of the colorant to the carrier to result in giving an adverse effect for charging properties of the toner.

With respect to the aforementioned toner, the softening point of the aforementioned toner is preferably 80 - 140 °C and more preferably 90 - 120 °C, in view of the fixing property of the toner, and the peeling property from the emboss hologram transfer member 20.

The softening point of the toner is determined using a flow tester which will be explained below: At first, 1.1 g of a toner is placed in a Petri dish at ambiences of 20 °C and 50% RH, followed by being made even and by being allowed to stand for at least 12 hours, and thereafter a pressed sample of a 1 cm diameter columnar shape is prepared via compression at a compression pressure of 3,820 kg/cm² for 30 seconds using press instrument SSP-10A (produced by Shimadzu Corp.). Subsequently, using flow tester CFf-500D (produced by Shimadzu Corp.) at ambiences of 24 °C and 50% RH, the pressed sample is extruded through the columnar die orifice (1 mm diameter × 1 mm) by use ofa 1 cm diameter piston, starting at the time of the termination of preheating, under conditions of a weight of 196 N (20 kgf), an initial temperature of 60 °C, preheating duration of 300 seconds, and a temperature increasing rate of 6 °C/mm. An offset method temperature T_{offset}, measured at an offset value of 5 mm via the melt temperature measurement method, being a temperature increasing method, is designated as the softening point.

With respect to the aforementioned toner, the number average molecular weight (Mn) is preferably 3,000 - 6,000, more preferably 3,500 - 5,500, the ratio of the weight average molecular weight (Mw) and the number average molecular weight (Mn) Mw/Mn is preferably 2.0 - 6.0, and more preferably 2.5 - 5.5.

The molecular weight of the toner is determined via a tetrahydrofuran (THF) soluble part gel permeation chromatography using a toner as a measuring sample, specifically, according to the following method.

Namely, using apparatus "HLC-8220" (produced by Tosoh Corp.) and column "TSK guard column + TSK gel Super HZM-M (three in series)" (produced by Tosoh Corp.), as the column temperature is kept at 40 °C, tetrahydrofuran (THF) as a carrier solvent is passed at a flow rate of 0.2 ml/min, and a measurement sample is dissolved in tetrahydrofuran so as for the concentration thereof to be I mg/ml under a condition in that dissolution is carried out using an ultrasonic dispersing device at room temperature for 5 minutes. Then a sample solution is obtained via treatment of a membrane filter of a 0.2 µm pore size, and 10 µl thereof is injected into the above apparatus along with the carrier solvent for detection using a refractive index detector (RI detector). Subsequently, the molecular weight ofthe measurement sample is calculated using a calibration curve wherein the molecular weight distribution of the sample is determined employing a monodispersed polystyrene standard particle. As the standard polystyrene sample used to obtain the calibration curve, there are employed any of those featuring a molecular weight of 6 × 10², 2.1 × 10³, 4 × 10³, 1.75 × 10⁴, 5.1 × 10⁴, 1.1 × 10⁵, 3.9 × 10⁵, 8.6 × 10⁵, 2 × 10⁶ and 4.48 × 10⁶. The calibration curve is drawn by connecting at least 10 points obtained via measurement using the standard polystyrene sample. Further, as a detector, the reflective index detector is utilized.

When a non-crystalline resin is contained in the binder resin, the glass transition point (Tg) of the toner containing the binder resin is preferably 20 - 70 °C, and more preferably 30 - 65 °C in view of the high temperature storage property.

When a non-crystalline resin is contained in the binder resin, the glass transition point (Tg) of the toner containing the binder resin is determined as follows.

Namely, the glass transition point (Tg) of the toner is determined using differential scanning calorimeter DSC-7 (produced by Parkin Elmer, Inc.) and thermal analyzer controller "TAC7/DX" (produced by Perkin Elmer, Inc.). Specifically, 4.50 mg of the toner is sealed in an aluminum pan (Kit No. 0219-0041) and placed in a DSC-7 sample holder. An empty aluminum pan is used as the reference measurement Subsequently, heating-cooling-heating temperature control is carried out over a measurement temperature range of 0 to 200 °C under measurement conditions of a temperature increasing rate of 10 °C/mm and a temperature decreasing rate of 10 °C/min. Measured data is obtained from the second heating stage, and then a glass transition point (Tg) is obtained as a temperature which is read at the intersection of the extension of the base line before the initial rise of the first endothermic peak, and the tangent showing the maximum inclination in the curve of the first endothermic peak just after the initial rise. In this instance, during the first temperature increase, temperature is kept at 200 °C for 5 minutes.

### [Average particle diameter of toner]

With respect to the aforementioned toner, the average particle diameter is preferably 3 - 10 µm, and more preferably 6 - 9µm, when expressed as a volume median diameter. The average particle diameter of this toner is controllable by, for example, the concentration of the flocculant (curing salting agent) to be used, the timing of addition of a condensation stop agent, the temperature at the time of condensation, and the composition of a polymer. When the volume median diameter of the toner is in the above-mentioned range, the transfer efficiency becomes higher, whereby the quality of a half-tone image, a thin line image or a dot image improves.

The volume median diameter of the toner is measured and calculated by using measuring apparatus Coulter Counter Multisizer 3 (produced by Beckman Coulter Inc.) connected to a computer system for data processing (produced by Beckman Coulter Inc.).

The measurement procedure is practically as follows: 0.02 g of the toner is added to 20 ml of a surfactant solution (for example, a surfactant solution obtained by diluting a surfactant containing neutral detergent with deionized water to a factor of 10 for the purpose of dispersing toner particle) and dispersed by an ultrasonic homogenizer to prepare a toner dispersion. Using a pipette, the toner dispersion is poured into a beaker having ISOTON II (produced by Beckman Coulter Co.) within a sample stand, until reaching a displayed measurement concentration of 5 - 10%. Reproducible measuring value can be obtained in this concentration. The particle diameters of 25,000 particles are measured using an aperture of 100 µm and frequency of the particle diameter was calculated by dividing the measuring range of from 2 to 60 µm into 256 divisions, and the particle diameter at 50% from the larger side of the cumulative volume percent is defined as the volume median diameter (volume D50% diameter).

### [Average Circularity of Toner Particles]

With respect to the aforementioned toner, the average circularity of toner particles constituting the toner is preferably in the range of 0.850 - 1.000, and more preferably 0.900 - 0.959, in view of improving the transferring efficiency.

When the average circularity is in the range of 0.850 - 1.000, the density of arrangement ofthe toner particles in the toner layer transferred onto the image support 11 becomes higher, whereby the fixing property is improved and the fixing offset tends not occur. Further, each toner particle tends not be pulverized, whereby the contamination of the abrasion charging member is suppressed, and the charging property of the toner is stabilized.

The average circularity can be determined by using FPIA-2100 (produced by Sysmex Co., Ltd.). Specifically, toner particles are blended in an aqueous surfactant solution and dispersed using an ultrasonic homogenizer for 1 min. A picture is taken using FPIA-2100 (produced by Sysmex Co., Ltd.) at the condition ofHPF (high power focusing) mode and an optimum concentration of the HPF detection number of 3000-10000. A circularity value is determined using following Equation (T) for each toner particle. The average circularity is the sum of circularity degree values of total particles divided by the number of particles. Reproducible data are obtained in such a range.

Equation (T): Circularity = (circumference length of a circle having an area equivalent to a projection of a particle) / (circumference length of a projection of a particle).

### [Manufacturing method of toner]

As the method to manufacture the toner for obtaining an electrophotographic image used for the method of forming a hologram image of the present invention, cited are, for example, a neading-pulverizing method, a suspension polymerization method, an emulsion polymerization aggregation method and other known method. In the present invention, it is preferable to use an emulsion aggregation method. By the emulsion aggregation method, small sized tone particles can be easily obtained from the viewpoints of a manufacturing cost and a manufacturing stability.

Herein, the emulsion aggregation method is a method for manufacturing toner particles comprising the steps of: mixing a dispersion of binder resin particles obtained by the emulsion polymerization method (hereinafter, refer to as "binder resin particles") and a dispersion of colorant particles (hereinafter, refer to as "colorant particles"), aggregating to the predetermined toner particle diameter and further controlling a shape of particles by fusing binder resin particles, whereby toner particles are manufactured. The binder resin particles may arbitrarily contain an internal additive, for example, a release agent, or a charge control agent

As a method to emulsify the binder resin, cited are an emulsion polymerization method, a mini-emulsion polymerization method, a seed polymerization method, and a phase-transfer emulsification method It is preferable to use a polymerization method in which only water is needed to form an emulsion.

A specific example of a method to manufacture a chromatic color toner using an emulsion aggregation method will be shown below.
(1) preparing a dispersion in which particles of a colorant is dispersed in an aqueous medium,
(2) preparing a dispersion in which particles of a binder resin which contains an internal additive as appropriate are dispersed in an aqueous medium,
(3) preparing toner particles by coagulating and fusing particles of the colorant and particles of the resin after mixing the dispersion of the colorant particles and the dispersion of the binder resin particles,
(4) separating the toner particles from the dispersion liquid (an aqueous medium) of toner particles by filtration to remove, for example, a surfactant from the toner particles,
(5) drying the toner particles, and
(6) adding an external additive to the toner particles.

The binder resin particles obtained by the above step (2) may have a multi-layered structure of two or more layers containing binder resins having different composition. These binder resin particles, for example, having two-layer structure, can be provided by preparing a binder resin particle dispersion according to the conventional emulsion polymerization method (first stage polymerization) followed by adding a polymerization initiator and a polymerizable monomer to the dispersion and polymerizing (second stage polymerization).

Toner having a core shell structure can be manufactured by the emulsion aggregation method. When the toner having a core shell structure is manufactured, core particles are manufactured by aggregation, association and fusion between resin particles for core particles and colorant particles. Then resin particles for the shell are added into the core particle dispersion to conduct coagulation and fusion of these resin particles to the core particles surface, whereby the core particle surface is covered, and colored particles having a core shell structure are manufactured.

Here, the aqueous medium refers to a medium composed of 50 to 100% by mass of water and 0 to 50% by mass of a water soluble organic solvent Examples of such a water-soluble organic solvent include methanol, ethanol, isopropanol, butanol, acetone, methyl ethyl ketone, and tetrahydrofuran. Of these preferred is an alcoholic organic solvent which does not dissolve the obtained resin.

### [Chain transfer agent]

In the polymerization step of the binder resin particles, commonly known chain transfer agents can be used for the purpose of adjusting the molecular weight of the binder resin. The chain transfer agents are not limited in particular. Examples thereof include: 2-chloroethanol; mercaptans such as octyl mercaptan, dodecyl mercaptan, and t-dodecyl mercaptan; and a styrene dimer.

### [Polymerization initiator]

In the polymerization step of the binder resin particles, as a polymerization initiator to obtain the binder resin, any water-soluble polymerization initiator is applicable. Examples of such a polymerization initiator include a persulfate (e.g., potassium persulfate, ammonium sulfate), an azo compound (e.g., 4,4'-azobis-4-cyanovalerianic acid and its salt, and 2,2'-azobis(2-amidinopropane) salt) and a peroxide-compound.

### [Surfactant]

When using a surfactant in a binder resin particles polymerization process, as a surfacant, well-known various surfactants such as an anion surfactant, a cation surfactant, and a nonion surfactant are usable.

### [Aggregation agent]

Aggregation agents usable in the binder resin particles polymerization process include, for example, an alkali metal salt and an alkaline earth metal salt. Alkali metals capable of forming an aggregation agent include lithium, potassium and sodium; alkaline earth metals capable of forming an aggregation agent include magnesium, calcium, strontium and barium. Of these preferred are potassium, sodium, magnesium, calcium and barium. Counter ions of the foregoing alkali metal or alkaline earth metal (that is, anions constituting a salt) include a chloride ion, a bromide ion, an iodide ion, a carbonate ion and a sulfate ion.

### [Releasing agent]

Releasing agents used for the toner are not specifically restricted and examples thereof include polyethylene wax, oxidized polyethylene wax, polypropylene was, oxidized polypropylene wax, carnauba wax, paraffin wax, microcrystalline wax, and Fischertropush wax; rice wax, and candelilla wax. The amount of wax contained in toner particles is preferably from 0.5 to 25 % by mass, more preferably from 3 to 10 % by mass based on the mass of the finally obtained toner.

The method to introduced a release agent in the toner particles is not specifically limited, and cited is a method similar to the aforementioned method to introduce a colorant.

### [Charge control agent]

When a charge control agent is incorporated in the toner, well know varieties of compound are usable as a charge control agent.

Specifically cited are oxycarboxylic acid complexes, such as a salicylic acid complex and a benzylic acid complex. Examples of a central metal which constitutes the acid complex include aluminum, calcium and zinc. Besides the oxycarboxylic acid complexes, further cited are, for example, a quarternary ammonium salt compound, a Nigrosine compound, azo complex dyes containing aluminum, iron or chromium, and a triphenyl methane dye.

The adding amount of a charge control agent is preferably from 0.1 to 10% by mass, and more preferably from 0.5 to 5% parts by mass based on the mass of the finally obtained toner.

The method to introduced a charge control agent in the toner particles is not specifically limited, and cited is a method similar to the aforementioned method to introduce a colorant

### [External additives]

The above described toner particles themselves can constitute the toner. However, to improve fluidity, chargeability, and cleaning properties, the toner particles may be added with an external additive, for example, a fluidizer or a cleaning aid which is so-called a post-treatment agent, to form the toner of the present invention.

The post-treatment agent includes, for example, inorganic oxide microparticles such as silica particles, alumina particles, or titanium oxide particles; stearate particles such as aluminum stearate particles or zinc stearate particles; or inorganic titanate particles such as strontium titanate or zinc titanate. These can be used alone or in combination of at least 2 types.

These inorganic particles are preferably subjected to surface treatment with a silane coupling agent, a titanium coupling agent, a higher fatty acid, or silicone oil to enhance heat-resistant storage stability and environmental stability.

The total added amount of these various external additives is 0.05 to 5 parts by weight, preferably 0.1 to 3 parts by weight based on 100 parts by weight of the toner. Further, various appropriate external additives may be used in combination.

### [Developer]

The toner may be used as a magnetic or non-magnetic single-component toner or a two-component toner by mixing with carriers. When the toner is used as a two-component toner, it is possible to use, as a carrier, magnetic particles including metals such as iron, ferrite, or magnetite, as well as alloys of the above metals with metals such as aluminum or lead, and ferrite particles are specifically preferable. Further, it is also possible to use, as the carrier, coated carriers in which the surface of magnetic particles is coated with a coating agent such as a resin; or binder-type carriers composed ofmagnetic fine powders dispersed in a binder resin.

A coating resin to form the coated carrier includes, for example, olefin resins, styrene resins, styrene-acryl resins, silicone resins, ester resins, and fluorine-containing resins. Further, a resin forming the resin-dispersion type carriers is not specifically limited, and various commonly known resin can be used including, for example, styrene-acryl resins, polyester resins, fluorine-containing resins, and phenol resins.

The volume median diameter of the carriers is preferably 20 to 100 µm, and more preferably 20 to 60 µm. The volume median diameter of the carriers can be determined typically with laser diffraction type particle size distribution meter "HELOS" (produced by Sympatec Co.) equipped with a wet-type homogenizer.

The embodiments of the present invention have been specifically described above, however, the present invention is not limited thereto, and it is possible to add varieties of modifications.

### EXAMPLES

Hereafter, the present invention will be explained using specific examples, however, the present invention is not limited thereto.

### [Preparation example of resin particle dispersion liquid 1]

### (1) First step polymerization

Into a 5 liter reaction vessel equipped with a stirrer, a temperature sensor, a cooling tube and a nitrogen gas introducing device, added was a surfactant solution which was prepared by dissolving 4 g of sodium polyoxyethylene (2) dodecylether sulfate into 3000 g of deionized water, and then, the temperature of the resultant solution was raised to 80 °C while stirring at 230 rpm under nitrogen gas flow.

After that, a solution which was prepared by dissolving 5 g of a polymerization initiator (potassium persulfate: KPS) into 200 g of deionized water, was added, and then, the temperature of the resultant solution was raised to 75 °C. Subsequently, a monomer mixed solution composed of the following materials was dropped over one hour:

| | |
|---|---|
| styrene | 567 g |
| n-butylacrylate | 165 g |
| methacrylic acid | 68 g |

The resulting solution was subjected to polymerization by stirring and heating at 75°C for two hours (the first step polymerization), to prepare a dispersion liquid [A1] in which resin particles [A1] were dispersed.

### (2) Second step polymerization

Into a 6 liter reaction vessel equipped with a stirrer, a temperature sensor, a cooling tube and a nitrogen gas introducing device, added was a surfactant solution which was prepared by dissolving 2 g of sodium polyoxyethylene (2) dodecylether sulfate into 1270 g of deionized water, which was then, heated to 80°C. After that, to the above vessel, 40 g (in solid content) of above dispersion liquid [A1 ] was added and, further, a monomer mixed solution which was prepared by dissolving the following materials at 80°C was added, followed by mixing/dispersing with a mechanical dispersion apparatus equipped with a circulation pathway "CLEARMIX" (manufactured by M-Technique Co., Ltd-) for one hour to prepare a dispersion liquid containing emulsified particles.

| | |
|---|---|
| styrene | 123 g |
| n-butylacrylate | 45 g |
| methacrylic acid | 20 g |
| n-octylmercaptan | 0.5 g |
| paraffin wax "HNP-57" (produced by NIPPON SEIRO Co., Ltd) | 82 g |

Subsequently, a polymerization initiator solution, which was prepared by dissolving 5 g of potassium persulfate into 100 ml of deionized water, was added to the above dispersion liquid. The solution was then subjected to polymerization (the second step polymerization) by stirring and heating at 80 °C for one hour, to prepare a dispersion liquid [A2] in which resin particles [A2] were dispersed.

### (3) Third step polymerization

Furthermore, an initiator solution, which was prepared by dissolving 10 g of potassium persulfate into 200 ml of deionized water, was added to the above dispersion liquid [A2], and then, a monomer mixed solution composed of the following materials was dropped over one hour at 80 °C:

| | |
|---|---|
| styrene | 390 g |
| n-butylacrylate | 143 g |
| methacrylic acid | 37 g |
| n-octylmercaptan | 13 g |

After completion of the dropping the resultant mixed solution was subjected to polymerization by heating and stirring over two hours, after which the solution was cooled down to 28 °C, whereby a resin particle dispersion liquid [1] in which composite resin particles [1] were dispersed.

The glass transition point of this resin particles [1] was 49 °C, and the softening point was 133 °C.

### [Manufacturing example of toner 1: Clear toner]

Into a 5 liter reaction vessel equipped with a stirrer, a temperature sensor, a cooling tube and a nitrogen gas introducing device, added were 450 g in solid content of the resin particle dispersion liquid [1] and a surfactant solution which was prepared by dissolving 2 g of sodium polyoxyethylene (2) dodecylether sulfate into 1100 g of deionized water, and then, the temperature of the resultant solution was adjusted at 30 °C, followed by adjusted the pH value at 10 by adding a 5N sodium hydroxide aqueous solution to the solution.

Subsequently, an aqueous solution prepared by dissolving 60 g of magnesium chloride hexahydrate in 60 g of deionized water was added over 10 minutes while agitating at 30°C. After leaving for 3 minutes, the temperature was started to increase, and the temperature was raised to 85 °C in 60 minutes. While keeping the temperature at 85 °C, particle growth was continued. In this state, using COULTER MULTISIZER III (produced by BECKMAN COULTER), the particle diameter of the particles obtained by the aggregation was measured, and, when the volume median diameter of the particles was increased to 6.7 µm, an aqueous solution obtained by dissolving 200 g of sodium chloride in 860 g of deionized water was added to stop the aggregation of the particles. After aggregation was stopped, the temperature of the liquid was kept at 95 °C, while agitating, for ripening. The ripening was continued until the average circularity became 0.90, and then the liquid was cooled to 30 °C.

The resultant dispersion liquid was subjected to solid-liquid separation using a basket type centrifuge MARK III type number 60 x 40 (produced by MATSUMOTO MACHINE CO., Ltd), whereby a wet cake of toner parent particles was obtained. This wet cake was repeatedly washed using 40 °C deionized water by the basket centrifuge until the electrical conductivity of the filtrate became 5 µS/cm. Then, the cake was moved to a flash jet dryer (produced by SEISHIN ENTERPRISE Co., Ltd.), and dried until the water content decreased to 0.5% by mass. Thus, toner parent particles [1] were obtained.

The toner parent particles [1] were added with 1 % by mass of hydrophobic silica (number average primary particle diameter of 12 nm) and 0.3% by mass of hydrophobic titanium oxide (number average primary particle diameter of 20 nm), followed by mixing with a "HENSCHEL MIXER" (produced by MITSUI MIIKE KOGYO Co., Ltd.), whereby clear toner [1] containing clear toner particles was obtained.

The softening point of the clear toner [1] was 133 °C, the glass transition point was 49°C, the volume median diameter was 6.5 µm and the average circularity was 0.910.

### [Manufacturing example of toner 2: Black toner]

Black toner [2] was manufactured in the same manner as the manufacturing example 1 except that 180 g (in solid content) of colorant particles dispersion liquid [Bk] prepared as described below was added together with 450 g (in solid content) of the resin particle dispersion liquid [1].

The softening point of the clear toner [2] was 133 °C, the glass transition point was 49 °C, the volume median diameter was 6.5 µm and the average circularity was 0.912.

### [Preparation example of colorant particle dispersion liquid Bk]

While stirring a surfactant solution containing 90 g of sodium dodecyl sulfate dissolved in 1,600g of deionized water, there was gradually added 420g of carbon black "Regal 330R" (made by Cabot Corporation), then a dispersing treatment was conducted employing "CLEAR MIX" (made by M Technique Co.) to obtain colorant particle dispersion liquid [Bk].

The volume median diameter of the prepared colorant particle dispersion liquid [Bk] was determined to be 110 nm employing "MICROTRAC UPA-150" (produced by HONEYWELL).

### [Manufacturing example of toner 3: Cyan toner]

Cyan toner [3] was manufactured in the same manner as the manufacturing example 1 except that 180 g (in solid content) of colorant particles dispersion liquid [Cy] prepared as described below was added together with 450 g (in solid content) of the resin particle dispersion liquid [1].

The softening point of the clear toner [3] was 133 °C, the glass transition point was 49 °C, the volume median diameter was 6.5 µm and the average circularity was 0.910.

### [Preparation example of colorant particle dispersion liquid Cy]

Colorant particle dispersion liquid [Cy] was prepared in the same manner as the preparation of colorant particle dispersion liquid [Bk] except that 240 g of "C. I. Pigment Blue 15:3" was used instead of 420g of carbon black "Regal 330R". The volume median diameter of the colorant particles was 112 nm.

### [Preparation examples of developer 1-3]

A ferrite carrier containing ferrite particles coated with a silicone resin having a volume median diameter of 40 µm was mixed with each of above clear toner [1], black toner [2] and cyan toner [3] so that the content of each toner is 6% by mass to obtain developers [1], [2] and [3], respectively.

### <Examples 1 - 8>

Using one of developer [2] containing a black toner and developer [3] containing a cyan toner, according to Table 1, a solid patch image of 2 cm × 5 cm was formed on an image support described in Table 1 employing a digital copier "bizhub C 353" (produced by Konica Minolta Business Technologies, Inc.) to obtain electrophotographic images each having a test image area formed on an image support.

Further, when a clear toner layer was formed according to Table 1, the digital copier "bizhub C 353" (produced by Konica Minolta Business Technologies, Inc.) was modified so that a clear toner developer [1] containing a clear toner was charged in the Y (yellow) developing unit, and a clear toner image (toner amount 4 g/m²) of a dimension corresponding to the entire surface area of the image support was formed over the solid patch image. The thickness of a solid patch image containing a chromatic color toner was 4 µm, and the total thickness, when a clear toner image was formed over the solid patch image, was 7µm.

Here, in Table 1, "Top Coat Paper" denotes "OK Top Coat 157 g/m²" produced by Oji Paper, Co., Ltd., "Gloss Coat Paper" denotes "POD Gloss Coat 157 g/m²" produced by Oji Paper, Co., Ltd., "Mat Coat Paper" denotes "POD Mat Coat 157 g/m²" produced by Oji Paper, Co., Ltd., and "Post Card" denotes "Japanese Stamped Card".

Subsequently, by using (a) the test image area in the electrophotographic image; and (b) emboss hologram transfer member A (thickness: 16µm) "Pattern 1L (KN-1)" (produced by KATANI) or emboss hologram transfer member B (thickness: 16µm) "Pattern 22L (KN-22)" (produced by KATANT) according to Table 1, a laminate of above (a) and (b) in which the corrugation surface was in contact with the test image area was passed through a heating/pressurizing rollers under the control condition described below, and then cooled for 20 seconds by the wind from a fan from the image support side of the laminate until the temperature of the surface on which no image was formed of the image support became not higher than 60°C, followed by peeling the emboss hologram transferring member (above (b)). Thus hologram images [1] - [8] were formed

### <Example 9>

Using a digital copier "bizhub C 353" (produced by Konica Minolta Business Technologies, Inc.), an electrophotographic image having a 10 digit figure of 10 point as a specific information recorded portion was prepared with developer [2] containing a black toner, and, on the specific information recorded portion of an original document, a rectangular clear toner solid patch of 1.5 cm x 5 cm of which the toner amount was 8 g/m² (namely, an electrophotographic image area) was formed using a digital copier "bizhub C 353" (produced by Konica Minolta Business Technologies, Inc.) modified to charge developer [1] containing a clear toner to the Y (yellow) developing unit Then, hologram image [9] was formed in the same manner as described for example 1.

### <Example 10>

Hologram image [10] was formed in the same manner as described for example 1 except that a rectangular clear toner solid patch of 2 cm ×5.5 cm was provided on a 1.5 cm × 4 cm bar-code printed as a specific information recorded portion.
- Heating/Pressurizing Rollers-
   - heating roller and pressuring roller were pressed with each other to form a nip portion;
   - heating roller: an aluminum substrate having a length of 357 mm, a diameter of 62 mm, and a thickness of 5 mm, of which surface was covered with a silicone rubber layer having a thickness of 1.5 mm, the aluminum substrate having, in its inside, a halogen ramp (heat source) of which temperature was controlled using a thermister;
   - pressurizing roller: an aluminum substrate having a length of 357 mm, a diameter of 52 mm, and a thickness of 5 mm, of which surface was covered with a silicone rubber layer having a thickness of 1.5 mm, the aluminum substrate having, in its inside, a halogen ramp (heat source) of which temperature was controlled using a thermister; and
   - nip width: 7 mm;
- Control Condition -
   - passing speed: 73 mm/sec;
   - surface temperature of heating roller: 160°C;
   - surface temperature of pressurizing roller: 100°C;
   - temperature of heating roller and pressurizing roller were controlled so that the surface temperature of surface 22 of the emboss hologram transferring member 20 just after passing through the rollers became 120 ± 15°C; and
   - pressing pressure: 0.29 MPa.

### <Comparative example 1>

Hologram image [11] was formed in the same manner as described for example 1 except that the surface temperature of the heating roller and the surface temperature of the pressurizing roller were controlled so that the surface temperature of surface 22 of the emboss hologram transferring member 20 just after passing through the heating/pressurizing rollers became as shown in Table 1.

### <Comparative example 2>

Hologram image [12] was formed in the same manner as described for example 2 except that the surface temperature of the heating roller and the surface temperature of the pressurizing roller were controlled so that the surface temperature of surface 22 of the emboss hologram transferring member 20 just after passing through the heating/pressurizing rollers became as shown in Table 1.

### <Comparative example 3>

Hologram image [13] was formed in the same manner as described for example 4 except that the surface temperature of the heating roller and the surface temperature of the pressurizing roller were controlled so that the surface temperature of the rear surface of surface 22 of the emboss hologram transferring member 20 just after passing through the heating/pressurizing rollers became as shown in Table 1.

### <Comparative example 4>

A transparent screen printing ink was prepared by mixing 4 mass parts of benzophenone with 100 mass parts of di-function urethane acrylate "M-1600" (produced by Toagosei Chemical Industry Co., Ltd.), and by adding an appropriate amount of solvent to obtain an adequate viscosity.

An ink layer was formed by screen printing using this ink. After the solvent was evaporated, an emboss surface of a transparent emboss hologram film was pressed onto the surface of the ink layer. Then, the ink layer was irradiated with UV rays through the transparent emboss hologram film to harden the ink layer. After that, the transparent emboss hologram film was peeled to obtain hologram image [14] exhibiting a hologram.

### (1) Evaluation of appearance of hologram

The hologram images [1] - [14] were subjected to visual sensory evaluation by an arbitrarily selected monitor person to evaluate the appearance of hologram according to the following criteria. The results were shown in Table 1.

In the following evaluation criteria, "A" and "B" were estimated to be acceptable in which there would be no practical problem, and "C" was judged to be unacceptable in which there would be a practical problem.

### - Evaluation criteria -

A: Appearance of hologram is clearly observed without unevenness by visual observation.
B: Appearance of hologram is observed by visual observation while slight unevenness was recognized, however, the unevenness is within an acceptable level.
C: Appearance of hologram is observed by visual observation, however, obvious unevenness is recognized, or appearance of hologram over entire surface is not obtained.

### (2) Evaluation of flexibility ofhologram image

From a portion where a hologram image area is formed of each of hologram images [1] - [14], a piece of 5 cm × 20 cm was cut out, and one end of the 5 cm width test image piece was fixed with an adhesive tape onto a driving roller having a radius of 20 mm, and wound up at a winding speed of 135 mm/sec so that the surface on which the hologram image area was formed became inside. This test was repeated 10 times using the same test image piece which was then subjected to visual sensory evaluation by an arbitrarily selected monitor person to evaluation according to the following criteria.

### - Evaluation criteria -

A: The hologram is observed as clearly as that before testing.
B: Slight unevenness is observed when compared with the hologram before testing, however, the hologram is within an acceptable level.
C: No appearance of hologram is recognized, or the hologram was not wholly observed due to notable unevenness.

**Table 1**

| | Hologram image No. | Image support | Electrophotographic image area | | | Temperature of surface 22 of emboss hologram transferring member 20 just after heating/ pressurizing | Emboss hologram transferring member | Evaluation | |
|---|---|---|---|---|---|---|---|---|---|
| | | | Color toner image | Clear toner image | Softening point of toner forming outermost layer | | | Appearance of hologram | Flexibility |
| Example 1 | 1 | OK Top Coat 157g/m² | Black | - | 133°C | 133 °C | A | B | B |
| Example 2 | 2 | OK Top Coat 157g/m² | Cyan | - | 133°C | 133 °C | A | B | B |
| Example 3 | 3 | OK Top Coat 157g/m² | Black | - | 133°C | 133°C | B | B | B |
| Example 4 | 4 | OK Top Coat 157g/m² | Black | Formed | 133 °C | 133 °C | A | A | A |
| Example 5 | 5 | OK Top Coat 157g/m² | Black | Formed | 133°C | 133°C | B | A | A |
| Example 6 | 6 | POD Gross Coat 157g/m² | Black | Formed | 133°C | 133°C | A | A | A |
| Example 7 | 7 | POD Mat Coat 157g/m² | Black | Formed | 133°C | 133°C | A | B | A |
| Example 8 | 8 | Postcard | Black | Formed | 133 °C | 133 °C | A | A | A |
| Example 9 | 9 | OK Top Coat 157g/m² | Black | Formed | 133°C | 133°C | A | A | A |
| Example 10 | 10 | OK Top Coat 157g/m² | Black | Formed | 133°C | 133°C | A | A | A |
| Comparative example 1 | 11 | OK Top Coat 157g/m² | Black | - | 133 °C | 128°C | A | C | C |
| Comparative example 2 | 12 | OK Top Coat 157g/m² | Cyan | - | 133°C | 128°C | A | C | C |
| Comparative example 3 | 13 | OK Top Coat 157g/m² | Black | Formed | 133 °C | 128°C | A | C | C |
| Comparative example 4 | 14 | OK Top Coat 157g/m² | - | - | - | - | A | A | C |

## Claims

1. A method of forming a hologram image comprising the steps of:
forming an electrophotographic image by forming an electrophotographic image area on an image support via an electrophotographic image forming method using a toner containing at least a thermoplastic resin;
laminating an emboss hologram transferring member over the electrophotographic image so that a surface on which a corrugation profile is formed of the emboss hologram transferring member is in contact with the electrophotographic image area in the electrophotographic image;
heating the electrophotographic image and the emboss hologram transferring member at a temperature not lower than a softening temperature of the toner while pressurizing the emboss hologram transferring member onto the electrophotographic image ;
cooling the electrophotographic image and the emboss hologram transferring member; and
peeling the emboss hologram transferring member from the electrophotographic image, whereby the corrugation profile of the emboss hologram transferring member is transferred onto the electrophotographic image area.

2. The method of claim 1, wherein cooling is carried out at a temperature lower than "a softening temperature of the toner - 50 °C".

3. The method of claim 1 or 2, wherein the electrophotographic image has an electrophotographic image area comprising a clear toner as an outermost surface.

4. The method of claim 1 or 2, wherein an electrophotographic image area comprising a clear toner is formed on an entire surface of the image support.

5. The method of any one of claims I to 4, wherein the emboss hologram transferring member has a film sheet forum, a belt form, a stamp form or a roller form.

6. The method of any one of claims 1 to 5, wherein the emboss hologram transferring member has a belt form.

7. The method of claim 6, wherein a material constituting the emboss hologram transferring member having the belt form is polyimide or polyethylene telephtharate.

8. The method of any one of claims I to 7, wherein the step of heating and pressurizing is carried out employing a heating/pressurizing device having a pair of corrugation profile tracing rollers equipped with at least one heating means, the pair of rollers being pressed with each other,
wherein a width of a nip portion formed between the pair of corrugation profile tracing rollers is 1 to 8 mm.

9. The method of claim 8, wherein time in which a point of the electrophotographic image passes through the nip portion is 0.03 to 0.4 second.

10. The method of any one of claims 1 to 9, wherein a pressure applied in the step of heating and pressurizing is 0.10 to 0.80 MPa.

11. The method of any one of claims 1 to 10, wherein a specific information recorded portion is formed on the image support and the electrophotographic image area is formed on the specific information recorded portion.

12. The method of any one of claims 1 to 10, wherein a specific information recorded portion is formed on the image support and the electrophotographic image area is formed on the specific information recorded portion, wherein the electrophotographic image area comprises a clear toner.

13. An electrostatic image developing toner used in the method of any one of claims 1 to 10.

14. A hologram image forming apparatus comprising
an electrostatic latent image carrier on which an electrostatic latent image is formed,
a developing means by which the electrostatic latent image is developed using a toner containing at least a thermoplastic resin to form a toner image,
a transferring means by which the toner image is transferred onto an image support,
a fixing means by which the toner image is fixed onto the image support by heating to form an electrophotographic image area on the image support, whereby an electrophotographic image is obtained, and
a hologram processing means by which a hologram image is formed on the electrophotographic image area according to a method comprising the steps of
laminating an emboss hologram transferring member over the electrophotographic image so that a surface on which a corrugation profile is formed of the emboss hologram transferring member is in contact with the electrophotographic image area of the electrophotographic image;
heating the electrophotographic image and the emboss hologram transferring member at a temperature not lower than a softening temperature of the toner while pressurizing the emboss hologram transferring member onto the electrophotographic image;
cooling the electrophotographic image and the emboss hologram transferring member; and
peeling the emboss hologram transferring member from the electrophotographic image,
whereby the corrugation profile of the emboss hologram transferring member is transferred onto the electrophotographic image area
